# EUROPEAN PATENT APPLICATION

(11) **EP 3 683 868 A1**
(43) Date of publication of application: **22.07.2020**
(21) Application number: 18855342.4
(22) Date of filing: 28.08.2018
(51) Int. Cl.: H01M 4/139, H01G 11/38, H01M 4/13, H01M 4/62

(54) **SLURRY COMPOSITION FOR ELECTROCHEMICAL ELEMENT ELECTRODES, ELECTRODE FOR ELECTROCHEMICAL ELEMENTS, ELECTROCHEMICAL ELEMENT, AND METHOD FOR PRODUCING SLURRY COMPOSITION FOR ELECTROCHEMICAL ELEMENT ELECTRODES**

(30) Priority: 15.09.2017 JP 2017177222
(71) Applicant: Zeon Corporation, Tokyo 100-8246 (JP)
(72) Inventor: FUKUMINE Mayumi, Tokyo 100-8246 (JP); OTSUKA Yusuke, Tokyo 100-8246 (JP)
(74) Representative: Maiwald Patent- und Rechtsanwaltsgesellschaft mbH
(86) International application number: PCT/JP2018/031803
(87) International publication number: WO 2019/054173

(57) **Abstract**

Provided is a slurry composition for an electrochemical device electrode with which it is possible to produce an electrode in which water content is lowered while also inhibiting swelling thereof in electrolyte solution, and that can cause an electrochemical device to display excellent device characteristics. The slurry composition for an electrochemical device electrode contains an electrode active material, a conductive material, a first polymer, a second polymer, and an organic solvent. The first polymer includes a monomer unit including a nitrogen-containing ring, and the second polymer includes a nitrile group-containing monomer unit in a proportion of not less than 10 mass% and not more than 70 mass%.

## Description

### TECHNICAL FIELD

The present disclosure relates to a slurry composition for an electrochemical device electrode, an electrode for an electrochemical device, an electrochemical device, and a method of producing a slurry composition for an electrochemical device electrode.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

An electrode that includes a current collector and an electrode mixed material layer formed on the current collector, for example, may be used as an electrode of an electrochemical device. The electrode mixed material layer is formed by, for example, applying a slurry composition for an electrochemical device electrode containing an electrode active material, a conductive material, and a binder onto the current collector, and then drying the slurry composition for an electrochemical device electrode.

Attempts have been made to improve slurry compositions used in the formation of electrode mixed material layers in recent years with the aim of further improving the performance of electrochemical devices (for example, refer to Patent Literature (PTL) 1).

PTL 1 discloses a slurry composition for a lithium ion secondary battery electrode containing an electrode active material, a water-soluble polymer including 20 weight% to 70 weight% of an ethylenically unsaturated carboxylic acid monomer unit and 1 weight% to 30 weight% of a fluorine-containing (meth)acrylic acid ester monomer unit, a vinylpyrrolidone polymer, and water. According to PTL 1, an electrode formed from this slurry composition can be used to cause a lithium ion secondary battery to display excellent high-temperature cycle characteristics and low-temperature characteristics.

### CITATION LIST

### Patent Literature

PTL 1: JP 2014-29788 A

### SUMMARY

### (Technical Problem)

However, when the conventional slurry composition described above in which water serves as a dispersion medium is used, water originating from the slurry composition may remain in an electrode mixed material layer and be imported into an electrochemical device, leading to deterioration of device characteristics (high-temperature cycle characteristics, low-temperature characteristics, etc.) of the electrochemical device.

Moreover, it is necessary for an electrode mixed material layer to not excessively swell in electrolyte solution in order that an electrode for an electrochemical device can enhance high-temperature cycle characteristics of an electrochemical device. However, there have been instances in which it has been difficult to produce an electrode for which swelling in electrolyte solution is inhibited using the conventional slurry composition described above.

In other words, there is room for improvement over an electrode produced using the conventional slurry composition described above in terms of inhibiting swelling in electrolyte solution, lowering water content, and enabling further improvement of device characteristics of an electrochemical device.

Accordingly, one objective of the present disclosure is to provide a slurry composition for an electrochemical device electrode with which it is possible to produce an electrode in which water content is lowered while also inhibiting swelling thereof in electrolyte solution, and that can cause an electrochemical device to display excellent device characteristics, and also to provide a method of producing this slurry composition for an electrochemical device electrode.

Another objective of the present disclosure is to provide an electrode for an electrochemical device in which water content is lowered while also inhibiting swelling thereof in electrolyte solution, and that can cause an electrochemical device to display excellent device characteristics.

Yet another objective of the present disclosure is to provide an electrochemical device having excellent device characteristics such as high-temperature cycle characteristics and low-temperature characteristics.

### (Solution to Problem)

The inventors conducted diligent investigation with the aim of solving the problems set forth above. The inventors discovered that by producing an electrode using a slurry composition containing an electrode active material, a conductive material, and two specific types of polymers that are dispersed and/or dissolved in an organic solvent, the water content of the obtained electrode can be lowered, swelling of the obtained electrode in electrolyte solution can be inhibited, and device characteristics of an electrochemical device can be enhanced. In this manner, the inventors completed the present disclosure.

Specifically, the present disclosure aims to advantageously solve the problems set forth above by disclosing a slurry composition for an electrochemical device electrode comprising an electrode active material, a conductive material, a first polymer, a second polymer, and an organic solvent, wherein the first polymer includes a monomer unit including a nitrogen-containing ring, and the second polymer includes a nitrile group-containing monomer unit in a proportion of not less than 10 mass% and not more than 70 mass%. When an electrode is produced using a slurry composition that contains an electrode active material, a conductive material, the aforementioned first polymer, the aforementioned second polymer, and an organic solvent in this manner, the water content of the obtained electrode can be lowered, swelling of the obtained electrode in electrolyte solution can be inhibited, and an electrochemical device can be caused to display excellent high-temperature cycle characteristics and low-temperature characteristics.

Note that the phrase "includes a monomer unit" as used with respect to a polymer in the present disclosure means that "a polymer obtained with the monomer includes a repeating unit derived from the monomer".

Moreover, the term "nitrogen-containing ring" as used in the present disclosure refers to a cyclic structure formed by a plurality of linked atoms including at least one nitrogen atom.

Furthermore, the proportion in which each repeating unit (monomer unit or structural unit) is included in a polymer can be measured by a nuclear magnetic resonance (NMR) method such as ¹H-NMR or ¹³C-NMR.

In the presently disclosed slurry composition for an electrochemical device electrode, the conductive material preferably has a specific surface area of not less than 100 m²/g and not more than 2,000 m²/g. When the specific surface area of the conductive material is within the range set forth above, high-temperature cycle characteristics and low-temperature characteristics of an electrochemical device can be further improved.

Note that the "specific surface area of a conductive material" referred to in the present disclosure is the BET specific surface area measured by nitrogen adsorption and can be measured in accordance with ASTM D3037-81.

In the presently disclosed slurry composition for an electrochemical device electrode, the nitrogen-containing ring is preferably a monocyclic structure. When the first polymer includes a monomer unit including a nitrogen-containing ring that is a monocyclic structure, low-temperature characteristics of an electrochemical device can be further improved.

In the presently disclosed slurry composition for an electrochemical device electrode, the monomer unit including the nitrogen-containing ring is preferably an N-vinyl-2-pyrrolidone unit. When the first polymer includes an N-vinyl-2-pyrrolidone unit, low-temperature characteristics of an electrochemical device can be further improved.

In the presently disclosed slurry composition for an electrochemical device electrode, the second polymer preferably further includes either or both of an alkylene structural unit and a (meth)acrylic acid ester monomer unit. When the second polymer includes an alkylene structural unit and/or a (meth)acrylic acid ester monomer unit in addition to the nitrile group-containing monomer unit, swelling of an electrode in electrolyte solution can be further inhibited, and high-temperature cycle characteristics of an electrochemical device can be further improved.

In the present disclosure, "(meth)acryl" is used to indicate "acryl" and/or "methacryl".

In the presently disclosed slurry composition for an electrochemical device electrode, content of the first polymer is preferably not less than 3 mass% and not more than 60 mass% of total content of the first polymer and the second polymer. When the proportion constituted by the first polymer among the total of the first polymer and the second polymer is within the range set forth above, stability of the slurry composition can be improved. Moreover, close adherence strength of an electrode mixed material layer to a current collector (i.e., peel strength of an electrode) can be increased, water content of an electrode can be further lowered, swelling of the electrode in electrolyte solution can be further inhibited, and, as a result, high-temperature cycle characteristics of an electrochemical device can be further improved.

The present disclosure also aims to advantageously solve the problems set forth above by disclosing an electrode for an electrochemical device comprising an electrode mixed material layer formed using any one of the slurry compositions for an electrochemical device electrode set forth above. By forming an electrode mixed material layer using any one of the slurry compositions set forth above, it is possible to obtain an electrode in which water content is lowered and for which swelling in electrolyte solution is inhibited. Moreover, this electrode can cause an electrochemical device to display excellent high-temperature cycle characteristics and low-temperature characteristics.

The present disclosure also aims to advantageously solve the problems set forth above by disclosing an electrochemical device comprising the electrode for an electrochemical device set forth above. An electrochemical device that includes the electrode set forth above has excellent device characteristics such as high-temperature cycle characteristics and low-temperature characteristics.

The present disclosure also aims to advantageously solve the problems set forth above by disclosing a method of producing any one of the slurry compositions for an electrochemical device electrode set forth above, comprising: producing a conductive material paste containing the conductive material, the first polymer, the second polymer, and the organic solvent; and adding the electrode active material to the conductive material paste. By forming an electrode mixed material layer using a slurry composition obtained through these steps, it is possible to obtain an electrode in which water content is lowered and for which swelling in electrolyte solution is inhibited. Moreover, this electrode can cause an electrochemical device to display excellent high-temperature cycle characteristics and low-temperature characteristics.

### (Advantageous Effect)

According to the present disclosure, it is possible to provide a slurry composition for an electrochemical device electrode with which it is possible to produce an electrode in which water content is lowered while also inhibiting swelling thereof in electrolyte solution, and that can cause an electrochemical device to display excellent device characteristics, and also to provide a method of producing this slurry composition for an electrochemical device electrode.

Moreover, according to the present disclosure, it is possible to provide an electrode for an electrochemical device in which water content is lowered while also inhibiting swelling thereof in electrolyte solution, and that can cause an electrochemical device to display excellent device characteristics.

Furthermore, according to the present disclosure, it is possible to provide an electrochemical device having excellent device characteristics such as high-temperature cycle characteristics and low-temperature characteristics.

### DETAILED DESCRIPTION

The following provides a detailed description of embodiments of the present disclosure.

The presently disclosed slurry composition for an electrochemical device electrode can be used in production of an electrode of an electrochemical device such as a lithium ion secondary battery or an electric double-layer capacitor. Also note that the presently disclosed slurry composition for an electrochemical device electrode can be produced by the presently disclosed method of producing a slurry composition for an electrochemical device electrode. The presently disclosed electrode for an electrochemical device can be produced using the presently disclosed slurry composition for an electrochemical device electrode. Moreover, a feature of the presently disclosed electrochemical device is that it includes the presently disclosed electrode for an electrochemical device.

### (Slurry composition for electrochemical device electrode)

The presently disclosed slurry composition contains an electrode active material, a conductive material, a first polymer, and a second polymer in an organic solvent, and may optionally further contain other components that can be contained in electrodes of electrochemical devices. The first polymer in the presently disclosed slurry composition includes a monomer unit including a nitrogen-containing ring, whereas the second polymer in the presently disclosed slurry composition includes a nitrile group-containing monomer unit in a proportion of not less than 10 mass% and not more than 70 mass%.

By producing an electrode using the presently disclosed slurry composition that contains the first polymer and second polymer described above and in which an organic solvent, rather than water, is used as a main dispersion medium, it is possible to lower the water content of the obtained electrode, inhibit swelling of the electrode in electrolyte solution, and cause an electrochemical device to display excellent high-temperature cycle characteristics and low-temperature characteristics.

### <Electrode active material>

The electrode active material is a material that gives and receives electrons in an electrode of an electrochemical device. Known electrode active materials that are used in electrochemical devices can be used as the electrode active material without any specific limitations. Specifically, any of the electrode active materials described below, for example, can be used without any specific limitations as an electrode active material that can be used in an electrode mixed material layer of a lithium ion secondary battery, which is one example of an electrochemical device.

### <<Positive electrode active material>>

A positive electrode active material compounded in a positive electrode mixed material layer of a positive electrode in a lithium ion secondary battery may, for example, be a compound including a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.

Specific examples of positive electrode active materials include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

One of these positive electrode active materials may be used individually, or two or more of these positive electrode active materials may be used in combination.

### <<Negative electrode active material>>

A negative electrode active material compounded in a negative electrode mixed material layer of a negative electrode in a lithium ion secondary battery may, for example, be a carbon-based negative electrode active material, a metal-based negative electrode active material, or a negative electrode active material that is a combination thereof.

The term "carbon-based negative electrode active material" refers to an active material having a main framework of carbon into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

The term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof.

One of these negative electrode active materials may be used individually, or two or more of these negative electrode active materials may be used in combination.

### <Conductive material>

The conductive material ensures electrical contact amongst the electrode active material in an electrode mixed material layer. Examples of conductive materials that can be used include conductive carbon materials such as carbon black (for example, acetylene black, Ketjenblack® (Ketjenblack is a registered trademark in Japan, other countries, or both), and furnace black), single-walled and multi-walled carbon nanotubes, carbon nanohorns, vapor-grown carbon fiber, milled carbon fiber obtained by firing and then pulverizing polymer fiber, single-layer and multi-layer graphene, and carbon non-woven fabric sheet obtained through firing of non-woven fabric made from polymer fiber; and fibers and foils of various metals.

One of these conductive materials may be used individually, or two or more of these conductive materials may be used in combination.

The specific surface area of the conductive material is preferably 100 m²/g or more, more preferably 200 m²/g or more, and even more preferably 500 m²/g or more, and is preferably 2,000 m²/g or less, and more preferably 1,300 m²/g or less. Low-temperature characteristics of an electrochemical device can be further enhanced when the specific surface area of the conductive material is 100 m²/g or more, whereas high-temperature cycle characteristics of an electrochemical device can be further improved when the specific surface area of the conductive material is 2,000 m²/g or less.

The content of the conductive material in the slurry composition per 100 parts by mass of the electrode active material is preferably 0.1 parts by mass or more, more preferably 0.3 parts by mass or more, and even more preferably 0.5 parts by mass or more, and is preferably 10 parts by mass or less, more preferably 5 parts by mass or less, and even more preferably 3 parts by mass or less. Low-temperature characteristics of an electrochemical device can be further enhanced when the amount of the conductive material in the slurry composition is 0.1 parts by mass or more per 100 parts by mass of the electrode active material, whereas peel strength of an electrode can be ensured and energy density of an electrochemical device can be improved when the amount of the conductive material in the slurry composition is 10 parts by mass or less per 100 parts by mass of the electrode active material.

### <First polymer>

The first polymer can dramatically improve dispersibility of the conductive material in the slurry composition and can sufficiently inhibit uneven distribution of the conductive material in an obtained electrode mixed material layer when used in combination with the subsequently described second polymer, as compared to cases in which these polymers are used individually. Moreover, the first polymer includes a monomer unit including a nitrogen-containing ring and can contribute to improving low-temperature characteristics of an electrochemical device, which is presumed to be a result of the contribution of the nitrogen-containing ring.

### <<Chemical composition>>

The first polymer includes a monomer unit including a nitrogen-containing ring and may optionally include repeating units (other repeating units) that are not of a monomer including a nitrogen-containing ring.

### [Monomer unit including nitrogen-containing ring]

The nitrogen-containing ring of the monomer unit including a nitrogen-containing ring may, for example, be a monocyclic structure or a fused ring structure, but is preferably a monocyclic structure from a viewpoint of further improving low-temperature characteristics of an electrochemical device.

Moreover, the nitrogen-containing ring of the monomer unit including a nitrogen-containing ring is preferably a cyclic amide from a viewpoint of further improving low-temperature characteristics of an electrochemical device.

Suitable examples of monomers including a nitrogen-containing ring that can form the monomer unit including a nitrogen-containing ring include N-vinyl cyclic amide monomers. Examples of N-vinyl cyclic amide monomers include N-vinyl-2-pyrrolidone, N-vinyl-ε-caprolactam, N-vinyl-2-piperidone, N-vinyl-3-morpholinone, N-vinyl-1,3-oxazin-2-one, and N-vinyl-3,5-morpholinedione. One of these N-vinyl cyclic amide monomers may be used individually, or two or more of these N-vinyl cyclic amide monomers may be used in combination. Of these N-vinyl cyclic amide monomers, N-vinyl-2-pyrrolidone is preferable from a viewpoint of further improving low-temperature characteristics of an electrochemical device.

The proportion in which the first polymer includes the monomer unit including a nitrogen-containing ring when all repeating units in the first polymer are taken to be 100 mass% is preferably 70 mass% or more, more preferably 80 mass% or more, even more preferably 90 mass% or more, and particularly preferably 95 mass% or more. When the proportion in which the monomer unit including a nitrogen-containing ring is included in the first polymer is 70 mass% or more, low-temperature characteristics of an electrochemical device can be further improved. Note that the proportion in which the monomer unit including a nitrogen-containing ring is included in the first polymer is not specifically limited and may be 100 mass% or less.

### [Other repeating units]

Examples of other repeating units that may optionally be included in the first polymer include, but are not specifically limited to, monomer units derived from monomers that are copolymerizable with a monomer including a nitrogen-containing ring such as previously described. Note that although the first polymer can include a nitrile group-containing monomer unit as another repeating unit, the proportion in which the nitrile group-containing monomer unit is included in the first polymer is not less than 0 mass% and less than 10 mass% when all repeating units in the first polymer are taken to be 100 mass%.

### <<Production method>>

No specific limitations are placed on the method by which the first polymer is produced. For example, the first polymer can be produced through polymerization of a monomer composition containing the monomers described above.

Note that the proportion in which each monomer is included in the monomer composition used in production of the first polymer can be set in accordance with the proportion in which each repeating unit is included in the first polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

### <<Weight-average molecular weight>>

The weight-average molecular weight of the first polymer obtained as described above is preferably 5,000 or more, and more preferably 8,000 or more, and is preferably 50,000 or less, and more preferably 20,000 or less. When the weight-average molecular weight of the first polymer is 5,000 or more, high-temperature cycle characteristics of an electrochemical device can be further improved. On the other hand, when the weight-average molecular weight of the first polymer is 50,000 or less, swelling of an electrode in electrolyte solution can be further inhibited, and water content of the electrode can be further lowered. In other words, an electrode for which swelling in electrolyte solution is further inhibited and water content is further lowered can be obtained when the weight-average molecular weight of the first polymer is not less than 5,000 and not more than 50,000. Moreover, this electrode can be used to cause an electrochemical device to display even better high-temperature cycle characteristics. The peel strength of an electrode can also be increased when the weight-average molecular weight of the first polymer is not less than 5,000 and not more than 50,000.

Note that the "weight-average molecular weight" referred to in the present disclosure can be measured by a method described in the EXAMPLES section of the present specification.

### <<End structure>>

The first polymer preferably includes a cationic group at the end thereof (polymerization initiation end and/or polymerization termination end) from a viewpoint of further improving low-temperature characteristics of an electrochemical device. Although no specific limitations are placed on the cationic group other than being a functional group that can bear a positive charge either on its own or in the presence of a substance that supplies a positive charge, the cationic group is preferably an amino group from a viewpoint of further improving low-temperature characteristics of an electrochemical device.

Also note that the cationic group can be introduced at the end of the first polymer by any known method without any specific limitations. For example, a cationic group can be introduced at a polymerization initiation end of the first polymer by using a polymerization initiator including a cationic group to initiate polymerization, or a cationic group can be introduced at a polymerization termination end of the first polymer by using a modifier including a cationic group to terminate polymerization.

### <<Content>>

The content of the first polymer in the slurry composition per 100 parts by mass of the electrode active material is preferably 0.01 parts by mass or more, more preferably 0.03 parts by mass or more, and even more preferably 0.06 parts by mass or more, and is preferably 1 part by mass or less, more preferably 0.5 parts by mass or less, and even more preferably 0.25 parts by mass or less. When the amount of the first polymer in the slurry composition is 0.01 parts by mass or more per 100 parts by mass of the electrode active material, high-temperature cycle characteristics of an electrochemical device can be improved. On the other hand, when the amount of the first polymer in the slurry composition is 1 part by mass or less per 100 parts by mass of the electrode active material, swelling of an electrode in electrolyte solution can be further inhibited, and water content of the electrode can be further lowered.

### <Second polymer>

In an electrode produced by using the slurry composition to form an electrode mixed material layer, the second polymer is a polymer that functions as a binder that holds components contained in the electrode mixed material layer so that these components do not become detached from the electrode mixed material layer. The second polymer is also a component that can contribute to inhibiting swelling of an electrode in electrolyte solution.

### <<Chemical composition>>

The second polymer includes a nitrile group-containing monomer unit in a proportion of not less than 10 mass% and not more than 70 mass% and also includes repeating units other than the nitrile group-containing monomer unit (other repeating units) in a proportion of not less than 30 mass% and not more than 90 mass%.

### [Nitrile group-containing monomer unit]

Examples of nitrile group-containing monomers that can form the nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. One of these nitrile group-containing monomers may be used individually, or two or more of these nitrile group-containing monomers may be used in combination. Of these nitrile group-containing monomers, acrylonitrile and methacrylonitrile are preferable from a viewpoint of further inhibiting swelling of an electrode in electrolyte solution and further improving device characteristics of an electrochemical device.

The proportion in which the second polymer includes the nitrile group-containing monomer unit when all repeating units (total of monomer units and structural units) in the polymer are taken to be 100 mass% is required to be not less than 10 mass% and not more than 70 mass%, is preferably 13 mass% or more, and more preferably 15 mass% or more, and is preferably 65 mass% or less, more preferably 60 mass% or less, and even more preferably 35 mass% or less. If the proportion in which the nitrile group-containing monomer unit is included in the second polymer is less than 10 mass%, swelling of an electrode in electrolyte solution cannot be inhibited, and an electrochemical device cannot be caused to display excellent high-temperature cycle characteristics. On the other hand, if the proportion in which the nitrile group-containing monomer unit is included in the second polymer is more than 70 mass%, swelling of an electrode mixed material layer in electrolyte solution cannot be inhibited, and an electrochemical device cannot be caused to display excellent high-temperature cycle characteristics. In other words, swelling of an electrode in electrolyte solution can be inhibited and an electrochemical device can be caused to display excellent high-temperature cycle characteristics when the proportion in which the nitrile group-containing monomer unit is included in the second polymer is not less than 10 mass% and not more than 70 mass%.

### [Other repeating units]

Examples of the one or more types of other repeating units that are included in the second polymer include, but are not specifically limited to, a (meth)acrylic acid ester monomer unit, an aliphatic conjugated diene monomer unit, an alkylene structural unit, and an acidic group-containing monomer unit.

### -(Meth)acrylic acid ester monomer unit-

Examples of (meth)acrylic acid ester monomers that can form the (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these (meth)acrylic acid ester monomers may be used individually, or two or more of these (meth)acrylic acid ester monomers may be used in combination. Of these (meth)acrylic acid ester monomers, methyl acrylate, ethyl acrylate, n-butyl acrylate, 2-ethylhexyl acrylate, methyl methacrylate, ethyl methacrylate, n-butyl methacrylate, and 2-ethylhexyl methacrylate are preferable, and n-butyl acrylate, ethyl methacrylate, and 2-ethylhexyl acrylate are more preferable.

### -Aliphatic conjugated diene monomer unit-

Examples of aliphatic conjugated diene monomers that can form the aliphatic conjugated diene monomer unit include aliphatic conjugated diene compounds having a carbon number of 4 or more such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination. Of these aliphatic conjugated diene monomers, 1,3-butadiene is preferable.

### -Alkylene structural unit-

The alkylene structural unit is a repeating unit composed only of an alkylene structure represented by a general formula -CₙH₂ₙ- (n is an integer of 2 or more).

Although the alkylene structural unit may be linear or branched, the alkylene structural unit is preferably linear (i.e., is preferably a linear alkylene structural unit) from a viewpoint of further inhibiting swelling of an electrode in electrolyte solution and further improving high-temperature cycle characteristics of an electrochemical device. Moreover, the alkylene structural unit preferably has a carbon number of 4 or more (i.e., n in the preceding general formula is preferably an integer of 4 or more) from a viewpoint of further inhibiting swelling of an electrode in electrolyte solution and further improving high-temperature cycle characteristics of an electrochemical device.

No specific limitations are placed on the method by which the alkylene structural unit is introduced into the second polymer. For example, method (1) or (2) set forth below may be used.
(1) A method involving producing a copolymer from a monomer composition containing an aliphatic conjugated diene monomer, and hydrogenating the resultant copolymer to convert an aliphatic conjugated diene monomer unit to an alkylene structural unit
(2) A method involving producing the second polymer from a monomer composition containing a 1-olefin monomer

Of these methods, method (1) is preferable in terms of ease of production of the second polymer.

Note that any of the aliphatic conjugated diene monomers previously described in the "Aliphatic conjugated diene monomer unit" section may be used as the aliphatic conjugated diene monomer in method (1). Moreover, one of these aliphatic conjugated diene monomers may be used individually, or two or more of these aliphatic conjugated diene monomers may be used in combination. Of these aliphatic conjugated diene monomers, 1,3-butadiene is preferable. In other words, the alkylene structural unit is preferably a structural unit obtained through hydrogenation of an aliphatic conjugated diene monomer unit (i.e., is preferably a hydrogenated aliphatic conjugated diene unit), and is more preferably a structural unit obtained through hydrogenation of a 1,3-butadiene unit (i.e., is more preferably a hydrogenated 1,3-butadiene unit). Selective hydrogenation of an aliphatic conjugated diene monomer unit can be carried out by a commonly known method such as an oil-layer hydrogenation method or a water-layer hydrogenation method.

The 1-olefin monomer used in method (2) may, for example, be ethylene, propylene, 1-butene, 1-hexene, or the like. One of these 1-olefin monomers may be used individually, or two or more of these 1-olefin monomers may be used in combination.

### -Acidic group-containing monomer unit-

Examples of acidic group-containing monomers that can form the acidic group-containing monomer unit include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Examples of sulfo group-containing monomers include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxy ethyl phosphate, and ethyl-(meth)acryloyloxyethyl phosphate.

Note that in the present disclosure, "(meth)acryloyl" is used to indicate "acryloyl" and/or "methacryloyl".

One of these acidic group-containing monomers may be used individually, or two or more of these acidic group-containing monomers may be used in combination.

### -Preferable other repeating units-

Of the other repeating units described above, the inclusion of an alkylene structural unit and/or a (meth)acrylic acid ester monomer unit in the second polymer is preferable, and the inclusion of an alkylene structural unit in the second polymer is more preferable from a viewpoint of further inhibiting swelling of an electrode in electrolyte solution and further improving high-temperature cycle characteristics of an electrochemical device.

In a case in which the second polymer includes an alkylene structural unit, the proportion in which the alkylene structural unit is included in the second polymer when all repeating units (total of monomer units and structural units) in the polymer are taken to be 100 mass% is preferably 30 mass% or more, and more preferably 45 mass% or more, and is preferably 80 mass% or less, and more preferably 70 mass% or less. When the proportion in which the alkylene structural unit is included in the second polymer is 30 mass% or more, swelling of an electrode in electrolyte solution can be further inhibited, and high-temperature cycle characteristics of an electrochemical device can be further improved. On the other hand, when the proportion in which the alkylene structural unit is included in the second polymer is 80 mass% or less, swelling of an electrode in electrolyte solution can be further inhibited, and high-temperature cycle characteristics of an electrochemical device can be further improved. In other words, swelling of an electrode in electrolyte solution can be further inhibited and high-temperature cycle characteristics of an electrochemical device can be further improved when the proportion in which the alkylene structural unit is included in the second polymer is not less than 30 mass% and not more than 80 mass%.

In a case in which the second polymer includes a (meth)acrylic acid ester monomer unit, the proportion in which the (meth)acrylic acid ester monomer unit is included in the second polymer when all repeating units (total of monomer units and structural units) in the polymer are taken to be 100 mass% is preferably 10 mass% or more, and is preferably 85 mass% or less. When the proportion in which the (meth)acrylic acid ester monomer unit is included in the second polymer is 10 mass% or more, swelling of an electrode in electrolyte solution can be further inhibited. On the other hand, when the proportion in which the (meth)acrylic acid ester monomer unit is included in the second polymer is 85 mass% or less, high-temperature cycle characteristics of an electrochemical device can be further improved. Moreover, solubility of the second polymer in organic solvent can be increased and stability of the slurry composition can be improved when the proportion in which the (meth)acrylic acid ester monomer unit is included in the second polymer is not less than 10 mass% and not more than 85 mass%. In addition, stability of the second polymer with respect to electrolyte solution increases, and high-temperature cycle characteristics of an electrochemical device can be improved.

### <<Production method>>

No specific limitations are placed on the method by which the second polymer set forth above is produced. For example, the second polymer can be produced by polymerizing a monomer composition containing the monomers described above to obtain a copolymer, and then hydrogenating the obtained copolymer as necessary.

Note that the proportion in which each monomer is included in the monomer composition used in production of the second polymer can be set in accordance with the proportion in which each repeating unit is included in the second polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

Furthermore, the hydrogenation method of the copolymer is not specifically limited and may be a typical method using a catalyst (for example, refer to WO 2012/165120 A1, WO 2013/080989 A1, and JP 2013-8485 A).

The iodine value of the second polymer obtained after hydrogenation is not specifically limited but is preferably 30 mg/100 mg or less. Note that the "iodine value" of a polymer referred to in the present disclosure can be measured in accordance with JIS K6235(2006) by a method described in the EXAMPLES section of the present specification.

### <<Weight-average molecular weight>>

The weight-average molecular weight of the second polymer obtained as described above is preferably 55,000 or more, more preferably 70,000 or more, and even more preferably 130,000 or more, and is preferably 500,000 or less, more preferably 400,000 or less, and even more preferably 300,000 or less. When the weight-average molecular weight of the second polymer is 55,000 or more, peel strength of an electrode can be improved. On the other hand, when the weight-average molecular weight of the second polymer is 500,000 or less, swelling of an electrode in electrolyte solution can be further inhibited, and high-temperature cycle characteristics of an electrochemical device can be further improved. In other words, peel strength of an electrode can be increased while also further inhibiting swelling of the electrode in electrolyte solution and further improving high-temperature cycle characteristics of an electrochemical device when the weight-average molecular weight of the second polymer is not less than 55,000 and not more than 500,000.

### <<Content>>

The content of the second polymer in the slurry composition per 100 parts by mass of the electrode active material is preferably 0.05 parts by mass or more, more preferably 0.2 parts by mass or more, and even more preferably 0.4 parts by mass or more, and is preferably 3 parts by mass or less, more preferably 1 part by mass or less, and even more preferably 0.5 parts by mass or less. When the amount of the second polymer in the slurry composition is 0.05 parts by mass or more per 100 parts by mass of the electrode active material, swelling of an electrode in electrolyte solution can be further inhibited. On the other hand, when the amount of the second polymer in the slurry composition is 3 parts by mass or less per 100 parts by mass of the electrode active material, high-temperature cycle characteristics of an electrochemical device can be further enhanced.

### <Content ratio of first polymer and second polymer>

No specific limitations are placed on the content ratio (by mass) of the first and second polymers in the presently disclosed slurry composition. The content of the first polymer in the presently disclosed slurry composition, for example, is preferably 3 mass% or more, more preferably 5 mass% or more, even more preferably 10 mass% or more, and particularly preferably 20 mass% or more of the total content of the first polymer and the second polymer, and is preferably 60 mass% or less, more preferably 50 mass% or less, and even more preferably 40 mass% or less of the total content of the first polymer and the second polymer. When the content of the first polymer among the total content of the first polymer and the second polymer is 3 mass% or more, swelling of an electrode in electrolyte solution can be further inhibited. On the other hand, when the content of the first polymer among the total content of the first polymer and the second polymer is 60 mass% or less, peel strength of an electrode can be increased, and water content of the electrode can be further lowered. In other words, peel strength of an electrode can be increased, and swelling of the electrode in electrolyte solution can be further inhibited while also further lowering the water content of the electrode, and further improving high-temperature cycle characteristics of an electrochemical device when the content of the first polymer among the total content of the first polymer and the second polymer is not less than 3 mass% and not more than 60 mass%. Moreover, stability of the slurry composition can be improved when the content of the first polymer among the total content of the first polymer and the second polymer is not less than 3 mass% and not more than 60 mass%.

### <Organic solvent>

Examples of the organic solvent contained in the slurry composition include alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide polar organic solvents such as N,N-dimethylformamide and N,N-dimethylacetamide; N-methylpyrrolidone (NMP); N,N-dimethyl sulfoxide; and aromatic hydrocarbons such as toluene, xylene, chlorobenzene, orthodichlorobenzene, and paradichlorobenzene. One of these organic solvents may be used individually, or two or more of these organic solvents may be used as a mixture. Of these examples, NMP is preferable as the organic solvent.

Note that although the slurry composition may contain water, the content of water in the slurry composition per 100 parts by mass of the organic solvent is preferably 10 parts by mass or less, more preferably 1 part by mass or less, even more preferably 0.1 parts by mass or less, and particularly preferably 0 parts by mass.

### <Other components>

Besides the components described above, the slurry composition may contain components such as a binder other than the second polymer (hereinafter, referred to as the "other binder"), a reinforcing material, a leveling agent, a viscosity modifier, and an additive for electrolyte solution. The other binder may be a commonly known binder such as polyvinylidene fluoride without any specific limitations. Moreover, the reinforcing material, leveling agent, viscosity modifier, and additive for electrolyte solution may be commonly known examples thereof, such as those described in WO 2012/115096 A1, without any specific limitations. One of these components may be used individually, or two or more of these components may be used in combination in a freely selected ratio.

### (Production method of slurry composition for electrochemical device electrode)

The presently disclosed slurry composition can be produced by mixing the above-described electrode active material, conductive material, first polymer, second polymer, and optionally added other components. Although no specific limitations are placed on how the slurry composition is produced in this manner, the presently disclosed slurry composition is preferably produced by the presently disclosed method of producing a slurry composition including a step of producing a conductive material paste containing the conductive material, the first polymer, the second polymer, and the organic solvent (conductive material paste production step) and a step of adding the electrode active material to the conductive material paste (electrode active material addition step). Dispersibility of the conductive material can be further improved by adopting the presently disclosed method of producing a slurry composition. Moreover, when a slurry composition obtained by the presently disclosed method of producing a slurry composition is used to produce an electrode, swelling of the electrode in electrolyte solution can be further inhibited while also further improving device characteristics of an electrochemical device.

Note that in a case in which another binder is used in production of the slurry composition, the other binder is preferably added to the conductive material paste at a timing after the conductive material paste production step, such as during the electrode active material addition step.

### <Conductive material paste production step>

The conductive material paste can be produced by mixing the conductive material, the first polymer, the second polymer, and the organic solvent that were previously described in the "Slurry composition for electrochemical device electrode" section. The mixing method is not specifically limited and may involve using a typical mixer such as a disper blade, a mill, or a kneader.

### <Electrode active material addition step>

The electrode active material is added to the conductive material paste obtained as described above and is further mixed therewith as necessary to produce the slurry composition. The mixing method is not specifically limited and may involve using any of the mixers listed in the "Conductive material paste production step" section.

### (Electrode for electrochemical device)

The presently disclosed electrode for an electrochemical device can be produced using the presently disclosed slurry composition for an electrochemical device electrode. For example, the presently disclosed electrode may include a current collector and an electrode mixed material layer that is formed on the current collector and that is normally composed of a dried product of the presently disclosed slurry composition set forth above. The electrode mixed material layer contains at least the electrode active material, the conductive material, the first polymer, and the second polymer. It should be noted that components contained in the electrode mixed material layer are components that were contained in the slurry composition for an electrochemical device electrode, and the preferred ratio of these components is also the same as the preferred ratio of the components in the slurry composition.

Swelling of the presently disclosed electrode in electrolyte solution is inhibited and water content of the presently disclosed electrode is lowered as a result of the electrode mixed material layer being formed using the presently disclosed slurry composition set forth above. Moreover, an electrochemical device can be caused to display excellent device characteristics (high-temperature cycle characteristics, low-temperature characteristics, etc.) by using the presently disclosed electrode.

### <Production method of electrode for electrochemical device>

The presently disclosed electrode can be produced, for example, through a step of applying the slurry composition set forth above onto a current collector (application step) and a step of drying the slurry composition that has been applied onto the current collector to form an electrode mixed material layer on the current collector (drying step).

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may be made of, for example, iron, copper, aluminum, nickel, stainless steel, titanium, tantalum, gold, or platinum. Of such current collectors, aluminum foil is particularly preferable as a current collector used in a positive electrode and copper foil is particularly preferable as a current collector used in a negative electrode. One of these materials may be used individually, or two or more of these materials may be used in combination in a freely selected ratio.

### <<Drying step>>

The slurry composition on the current collector may be dried by any commonly known method without any specific limitations. Examples of drying methods that can be used include drying by warm, hot, or low-humidity air; drying in a vacuum; and drying by irradiation with infrared light, electron beams, or the like. Drying of the slurry composition on the current collector in this manner forms an electrode mixed material layer on the current collector and thereby provides an electrode for an electrochemical device that includes the current collector and the electrode mixed material layer.

After the drying step, the electrode mixed material layer may be further subjected to a pressing process, such as mold pressing or roll pressing. This pressing process can improve peel strength of the electrode.

### (Electrochemical device)

The presently disclosed electrochemical device may be, but is not specifically limited to, a lithium ion secondary battery or an electric double-layer capacitor, and is preferably a lithium ion secondary battery. A feature of the presently disclosed electrochemical device is that it includes the presently disclosed electrode for an electrochemical device. An electrochemical device such as described above has excellent device characteristics such as high-temperature cycle characteristics and low-temperature characteristics.

The following describes configuration of a lithium ion secondary battery as one example of the presently disclosed electrochemical device. The lithium ion secondary battery normally includes a positive electrode, a negative electrode, an electrolyte solution, and a separator, wherein at least one of the positive electrode and the negative electrode is the presently disclosed electrode for an electrochemical device.

### <Electrodes>

A known electrode can be used as an electrode other than the presently disclosed electrode for an electrochemical device. Specifically, an electrode obtained by forming an electrode mixed material layer on a current collector by a known method may be used as an electrode.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable, and LiPF₆ is particularly preferable as these lithium salts readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Suitable examples include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

Moreover, a known additive such as vinylene carbonate (VC), fluoroethylene carbonate (FEC), or ethyl methyl sulfone may be added to the electrolyte solution.

### <Separator>

Examples of separators that can be used include, but are not specifically limited to, those described in JP 2012-204303 A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the capacity per volume.

### <Production method of lithium ion secondary battery>

The lithium ion secondary battery corresponding to the presently disclosed electrochemical device can be produced by, for example, stacking the positive electrode and the negative electrode with the separator in-between, performing rolling, folding, or the like of the resultant laminate as necessary in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a monomer unit in the polymer that is formed through polymerization of a given monomer is normally, unless otherwise specified, the same as the ratio (charging ratio) of the given monomer among all monomers used in polymerization of the polymer.

In the examples and comparative examples, the following methods were used to evaluate the weight-average molecular weight of a polymer, the inhibition of swelling in electrolyte solution, water content, and peel strength of a positive electrode, and the high-temperature cycle characteristics and low-temperature characteristics of a lithium ion secondary battery.

### <Weight-average molecular weight>

The weight-average molecular weight of an obtained polymer was measured by gel permeation chromatography (GPC) under the following conditions.
Column: TSKgel α-M × 2 (7.8 mm I.D. × 30 cm × 2 columns; produced by Tosoh Corporation)
Eluent: Dimethylformamide (50 mM lithium bromide, 10 mM phosphoric acid)
Flow rate: 0.5 mL/min
Sample concentration: Approximately 0.5 g/L (solid content concentration)
Injection volume: 200 µL
Column temperature: 40°C
Detector: Differential refractive index detector RI (HLC-8320 GPC RI detector produced by Tosoh Corporation)
Detector conditions: RI: Pol (+), Res (1.0 s)
Molecular weight marker: Standard Polystyrene Kit PStQuick Kit-H produced by Tosoh Corporation

### <Inhibition of swelling in electrolyte solution>

A circular shape of 1.5 mm in diameter was cut out from a sheet-shaped positive electrode obtained in each example or comparative example to obtain a test specimen. The thickness TO of the positive electrode mixed material layer was measured using a thickness gauge. The test specimen was then immersed for 72 hours in electrolyte solution (LiPF₆ solution of 1.0 M in concentration (solvent: mixed solution obtained by adding 5 mass% of fluoroethylene carbonate to a mixed solvent of ethylene carbonate/ethyl methyl carbonate = 3/7 (mass ratio); additive: 2 volume% of vinylene carbonate)) that was controlled to a temperature of 60°C inside a thermostatic tank. The positive electrode was subsequently removed from the electrolyte solution, and the thickness T1 of the positive electrode mixed material layer was measured using a thickness gauge. The rate of thickness change indicated by ΔT = {(T1 - T0)/T0} × 100(%) was calculated and was evaluated by the following standard. A smaller value for the rate of thickness change ΔT indicates that swelling of the positive electrode in electrolyte solution is inhibited.
A: Rate of thickness change ΔT of less than 15%
B: Rate of thickness change ΔT of not less than 15% and less than 20%
C: Rate of thickness change ΔT of not less than 20% and less than 25%
D: Rate of thickness change ΔT of not less than 25% and less than 30%
E: Rate of thickness change ΔT of 30% or more

### <Water content>

A rectangular shape of 2 cm × 10 cm was cut out from a sheet-shaped positive electrode obtained in each example or comparative example to obtain a test specimen. The water content W (ppm) of the test specimen was measured by the Karl Fischer method (water vaporization method of JIS K-0068(2001); vaporization temperature: 150°C). A smaller water content W indicates that the positive electrode has lower water content and that the amount of water imported into a lithium ion secondary battery can be reduced.
A: Water content W of less than 200 ppm
B: Water content W of not less than 200 ppm and less than 250 ppm
C: Water content W of not less than 250 ppm and less than 300 ppm
D: Water content W of not less than 300 ppm and less than 500 ppm
E: Water content W of 500 ppm or more

### <Peel strength>

A rectangular shape of 100 mm (length) × 10 mm (width) was cut out from a sheet-shaped positive electrode obtained in each example or comparative example to obtain a test specimen. The test specimen was placed with the positive electrode mixed material layer surface facing downward and cellophane tape (tape prescribed by JIS Z1522) was affixed to the positive electrode mixed material layer surface. One end of the current collector was then pulled in a perpendicular direction at a pulling speed of 100 mm/min to peel off the current collector, and the stress during peeling was measured. (Note that the cellophane tape was secured to a test stage.) This measurement was performed three times. An average value of the stress was evaluated by the following standard as the peel strength. A larger value for the peel strength indicates stronger close adherence between the positive electrode mixed material layer and the current collector.
A: Peel strength of 20 N/m or more
B: Peel strength of not less than 15 N/m and less than 20 N/m
C: Peel strength of not less than 10 N/m and less than 15 N/m
D: Peel strength of not less than 5 N/m and less than 10 N/m
E: Peel strength of less than 5 N/m

### <High-temperature cycle characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2 C constant-current method at a temperature of 25°C and was then subjected to 12 hours of aging at a temperature of 60°C. The lithium ion secondary battery was subsequently discharged to a cell voltage of 3.00 V by a 0.2 C constant-current method at a temperature of 25°C. Thereafter, the lithium ion secondary battery was CC-CV charged by a 0.2 C constant-current method (upper limit cell voltage 4.35 V) and was CC discharged to a cell voltage of 3.00 V by a 0.2 C constant-current method. This charging and discharging at 0.2 C was repeated three times.

The lithium ion secondary battery was subsequently subjected to 100 cycles of charging and discharging between cell voltages of 4.35 V and 3.00 V with a charge/discharge rate of 0.5 C in an environment having a temperature of 45°C. The discharge capacity of the 1^{st} cycle was defined as XI and the discharge capacity of the 100^{th} cycle was defined as X2. A capacity maintenance rate indicated by ΔC = (X2/X1) × 100(%) was calculated and was evaluated by the following standard. A larger value for the capacity maintenance rate ΔC indicates that the lithium ion secondary battery has better high-temperature cycle characteristics.
A: Capacity maintenance rate ΔC of 90% or more
B: Capacity maintenance rate ΔC of not less than 87% and less than 90%
C: Capacity maintenance rate ΔC of not less than 84% and less than 87%
D: Capacity maintenance rate ΔC of not less than 80% and less than 84%
E: Capacity maintenance rate ΔC of less than 80%

### <Low-temperature characteristics>

In order to evaluate low-temperature characteristics of a lithium ion secondary battery produced in each example or comparative example, IV resistance was measured as described below. The lithium ion secondary battery was charged to a 50% SOC (State Of Charge) at 1 C (C is a value expressed by rated capacity (mA)/1 hour (h)) in a -10°C atmosphere and was then charged for 15 seconds and discharged for 15 seconds at each of 0.5 C, 1.0 C, 1.5 C, and 2.0 C, centered on an SOC of 50%. The battery voltage after 15 seconds (charging side and discharging side) in each of these cases was plotted against the current, and then the gradient of the resultant plot was determined as IV resistance (Ω) (IV resistance during charging and IV resistance during discharging). The obtained value of IV resistance (Ω) was converted to an index with the value for Comparative Example 1 taken to be 100 and was evaluated by the following standard. A smaller value for IV resistance indicates lower internal resistance and that the lithium ion secondary battery has better low-temperature characteristics.
A: IV resistance of less than 60
B: IV resistance of not less than 60 and less than 70
C: IV resistance of not less than 70 and less than 80
D: IV resistance of not less than 80 and less than 120
E: IV resistance of 120 or more

### (Example 1)

### <Production of first polymer>

A reactor was charged with 374.5 parts of deionized water, 0.5 parts of diethanolamine, and 25 parts of sodium hypophosphite, and these materials were heated to 90°C. Next, 500 parts of N-vinyl-2-pyrrolidone as a monomer including a nitrogen-containing ring was added into the reactor over 180 minutes and 100 parts of an initiator aqueous solution containing 10 parts of 2,2'-azobis-2-amidinopropane dihydrochloride and 90 parts of deionized water was added into the reactor over 210 minutes. In addition, 5 parts of an aqueous solution containing 0.5 parts of 2,2'-azobis-2-amidinopropane dihydrochloride and 4.5 parts of deionized water was added all together after 210 minutes and after 240 minutes from the start of polymerization. Also, 8.0 parts of 10% malonic acid aqueous solution as a pH adjuster was added after 270 minutes from the start of polymerization to obtain a water dispersion of a first polymer. The weight-average molecular weight of the obtained first polymer was measured. The result is shown in Table 1.

### <Production of second polymer>

A reactor having an internal capacity of 10 L was charged with 100 parts of deionized water, 35 parts of acrylonitrile as a nitrile group-containing monomer, and 65 parts of 1,3-butadiene as an aliphatic conjugated diene monomer. Next, 2 parts of potassium oleate as an emulsifier, 0.1 parts of potassium phosphate as a stabilizer, and 0.5 parts of 2,2',4,6,6'-pentamethylheptane-4-thiol (TIBM) as a molecular weight modifier were added into the reactor, 0.35 parts of potassium persulfate was also added as a polymerization initiator, and emulsion polymerization was carried out at 30°C to perform copolymerization of the acrylonitrile and 1,3-butadiene.

At the point at which the polymerization conversion rate reached 90%, 0.2 parts of hydroxylamine sulfate was added to terminate polymerization. Next, water vapor distillation was performed under reduced pressure at approximately 70°C and residual monomer was recovered. Thereafter, 2 parts of alkylated phenol was added as an anti-aging agent, and a water dispersion of a polymer was obtained.

A 1 L autoclave equipped with a stirrer was charged with 400 mL (total solid content: 48 g) of the obtained water dispersion of the polymer, and nitrogen gas was passed therethrough for 10 minutes to remove dissolved oxygen in the water dispersion. Thereafter, 50 mg of palladium acetate as a hydrogenation reaction catalyst was dissolved in 180 mL of water to which nitric acid had been added in an amount of 4 molar equivalents of the Pd, and the resultant solution was added into the autoclave. The system was purged twice with hydrogen gas and then the contents of the autoclave were heated to 50°C and a hydrogenation reaction was carried out for 6 hours in a state of pressurization to 3 MPa with hydrogen gas.

The contents of the autoclave were subsequently returned to normal temperature and the system was converted to a nitrogen atmosphere. Thereafter, concentrating was performed to a solid content concentration of 40% using an evaporator to yield a water dispersion of a second polymer. The weight-average molecular weight of the obtained second polymer was measured. The result is shown in Table 1. Moreover, the iodine value of the obtained second polymer was measured to be 10 mg/100 mg. Note that the measurement procedure for the iodine value was as follows.

First, 100 g of the water dispersion of the polymer was coagulated in 1 L of methanol and was then vacuum dried at 60°C for 12 hours. The iodine value of the dried polymer that was obtained was measured in accordance with JIS K6235(2006).

### <Production of binder composition for positive electrode>

The water dispersion of the first polymer, the water dispersion of the second polymer, and an appropriate amount of NMP as an organic solvent were mixed. Note that the mixing ratio (in terms of solid content) of the first polymer and the second polymer was set as first polymer:second polymer = 20:80. Next, water contained in the resultant mixture was completely evaporated under reduced pressure to obtain a binder composition for a positive electrode containing the first polymer, the second polymer, and NMP.

### <Production of conductive material paste for positive electrode>

A conductive material paste for a positive electrode was produced by using a disper blade to stir (3,000 rpm, 60 minutes) 3.0 parts of acetylene black (specific surface area: 800 m²/g) as a conductive material, 0.6 parts (in terms of solid content) of the binder composition, and NMP. Note that the additive amount of NMP was adjusted such that the solid content concentration of the obtained conductive material paste for a positive electrode was 10%. Also note that this production procedure is denoted as "X" in the subsequently described Table 1.

### <Production of slurry composition for positive electrode>

A slurry composition for a positive electrode was produced by adding 100 parts of a three-component active material having a layered structure (LiNi_{0.5}Co_{0.2}Mn_{0.3}O₂; average particle diameter: 10 µm) as a positive electrode active material, 2 parts (in terms of solid content) of an NMP solution of polyvinylidene fluoride as another binder, and NMP as an organic solvent to the conductive material paste, and using a disper blade to perform stirring (3,000 rpm, 60 minutes). Note that the additive amount of NMP was adjusted such that the viscosity of the obtained slurry composition for a positive electrode (measured in accordance with JIS Z8803:1991 using a single cylinder rotary viscometer; temperature: 25°C; rotation speed: 60 rpm) was within a range of 4,000 mPa·s to 5,000 mPa·s.

### <Production of positive electrode>

Aluminum foil of 20 µm in thickness was prepared as a current collector. The slurry composition for a positive electrode was applied onto one side of the aluminum foil by a comma coater such as to have a coating weight after drying of 20 mg/cm², and was dried at 90°C for 20 minutes and at 120°C for 20 minutes. Heat treatment was subsequently performed at 60°C for 10 hours to obtain a positive electrode web. This positive electrode web was rolled by roll pressing to produce a sheet-shaped positive electrode including the aluminum foil and a positive electrode mixed material layer of 3.2 g/cm³ in density. The thickness of the sheet-shaped positive electrode was 70 µm. The sheet-shaped positive electrode was cut to 4.8 mm in width and 50 cm in length to obtain a positive electrode for a lithium ion secondary battery. The obtained positive electrode was used to evaluate inhibition of swelling in electrolyte solution, water content, and peel strength. The results are shown in Table 1.

### <Production of negative electrode>

A slurry composition for a negative electrode was produced by mixing 98 parts of graphite (average particle diameter: 20 µm; specific surface area: 4.2 m²/g) as a negative electrode active material and 1 part (in terms of solid content) of a styrene butadiene polymer as a binder, further adding 1 part of carboxymethyl cellulose, and performing mixing using a planetary mixer.

Copper foil of 150 µm in thickness was prepared as a current collector. The slurry composition for a negative electrode was applied onto one side of the copper foil such as to have a coating weight after drying of 10 mg/cm², and was dried at 60°C for 20 minutes and at 110°C for 20 minutes. Heat treatment was subsequently performed at 60°C for 10 hours to obtain a negative electrode web. The negative electrode web was rolled by roll pressing to produce a sheet-shaped negative electrode including the copper foil and a negative electrode mixed material layer of 1.5 g/cm³ in density.

### <Production of lithium ion secondary battery>

A battery container was produced using a laminate film including an aluminum sheet that was coated at both sides by resin formed from polypropylene. Next, the positive electrode and the negative electrode obtained as described above were used to sandwich a microporous membrane made from polyethylene therebetween such that the electrode mixed material layers of the electrodes faced toward one another, and in this manner obtain a laminate. The obtained laminate was packed into the battery container. Next, electrolyte solution was injected into the battery container in which the laminate had been packed. Note that the electrolyte solution was produced by dissolving LiPF₆ with a concentration of 1 mol/L in a mixed solvent obtained by mixing ethylene carbonate (EC) and diethyl carbonate (DEC) such that EC:DEC = 1:2 (volume ratio at 25°C). Next, the electrode mixed material layer was removed from the end of each of the positive electrode and the negative electrode, and the end of the electrode was extended outside of the battery container. In this state, the laminate film was sealed to produce a laminate cell that was a lithium ion secondary battery. High-temperature cycle characteristics and low-temperature characteristics of the obtained lithium ion secondary battery were evaluated. The results are shown in Table 1.

### (Example 2)

A first polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 1 with the exception that a second polymer produced as described below was used in production of the binder composition for a positive electrode. The results are shown in Table 1.

### <Production of second polymer>

A reactor equipped with a stirrer was charged with 70 parts of deionized water, 0.2 parts of sodium dodecylbenzenesulfonate, and 0.3 parts of potassium persulfate. The gas phase of the reactor was purged with nitrogen gas and the temperature was raised to 60°C. Meanwhile, a monomer mixture was obtained in a separate vessel by mixing 50 parts of deionized water, 0.5 parts of sodium dodecylbenzenesulfonate, 82 parts of n-butyl acrylate as a (meth)acrylic acid ester monomer, 15 parts of acrylonitrile as a nitrile group-containing monomer, and 3 parts of methacrylic acid as an acidic group-containing monomer. The monomer mixture was added continuously into the reactor over 4 hours to carry out polymerization. The reaction was carried out at 60°C during the addition. After the addition was completed, a further 3 hours of stirring was performed at 70°C to complete the reaction. The polymerization conversion rate was 99%. The resultant polymerization reaction liquid was cooled to 25°C and was subsequently adjusted to pH 7 through addition of ammonia water. Thereafter, steam was introduced and unreacted monomer was removed to obtain a water dispersion of a second polymer.

### (Example 3)

A first polymer was produced in the same way as in Example 1 with the exception that N-vinyl-ε-caprolactam was used instead of N-vinyl-2-pyrrolidone in production of the first polymer. Moreover, a second polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 1 with the exception that the first polymer produced as described above was used in production of the binder composition for a positive electrode. The results are shown in Table 1.

### (Examples 4 and 5)

A first polymer, a second polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 1 with the exception that the mixing ratio of the first polymer and the second polymer (in terms of solid content; first polymer:second polymer) was changed to 5:95 (Example 4) or 50:50 (Example 5) in production of the binder composition for a positive electrode, and acetylene black having a specific surface area of 200 m²/g was used as a conductive material in production of the conductive material paste for a positive electrode. The results are shown in Table 1.

### (Example 6)

A second polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 1 with the exception that a first polymer produced as described below was used. The results are shown in Table 1.

### <Production of first polymer>

A reactor was charged with 94 parts of water and 4.5 × 10⁻⁶ parts of copper(II) sulfate, and these materials were heated to 60°C. Next, a temperature of 60°C was maintained while 100 parts of N-vinyl-2-pyrrolidone as a monomer including a nitrogen-containing ring, 0.6 parts of 25% ammonia water, and 3.5 parts of 35% hydrogen peroxide aqueous solution were added dropwise over 3 hours. After this dropwise addition, 0.2 parts of 25% ammonia water was added. Once 4 hours had passed from the start of the reaction, the temperature was raised to 80°C, and 0.5 parts of 35% hydrogen peroxide water was added. Next, 0.5 parts of 35% hydrogen peroxide water was added once 5.5 hours had passed from the start of the reaction, and the temperature was further held at 80°C for 1 hour to yield a water dispersion of a first polymer.

### (Example 7)

A second polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 1 with the exception that a first polymer produced as described below was used. The results are shown in Table 1.

### <Production of first polymer>

A reactor was charged with 400 parts of N-vinyl-2-pyrrolidone as a monomer including a nitrogen-containing ring and 1,600 parts of water. These materials were heated to 70°C while performing nitrogen purging, and 0.4 parts of 2,2'-azobis(2-methylbutyronitrile) was added in the form of a 10% isopropyl alcohol solution to initiate polymerization. Once 1 hour had passed from the start of polymerization, jacket temperature adjustment was performed to maintain the reaction liquid at 90°C to 99°C until the end of polymerization. Once 2 hours had passed from the start of the reaction, 0.4 parts of 2,2'-azobis(2-methylbutyronitrile) 10% isopropyl alcohol solution was added, and once a conversion rate of 99.5% or more was confirmed, a water dispersion of a first polymer was obtained.

### (Example 8)

A first polymer, a second polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 1 with the exception that acetylene black having a specific surface area of 70 m²/g was used as a conductive material in production of the conductive material paste for a positive electrode. The results are shown in Table 1.

### (Example 9)

A first polymer, a second polymer, a slurry composition for a positive electrode, a positive electrode, a negative electrode, and a lithium ion secondary battery were produced and evaluations were performed in the same way as in Example 1 with the exception that a conductive material paste for a positive electrode produced as described below was used. The results are shown in Table 1.

### <Production of conductive material paste for positive electrode>

Water contained in a water dispersion of a first polymer obtained in the same way as in Example 1 was completely evaporated under reduced pressure to obtain a powder of the first polymer. Moreover, a water dispersion of a second polymer obtained in the same way as in Example 1 was mixed with NMP and then water contained in the resultant mixture was completely evaporated under reduced pressure to obtain an NMP solution of the second polymer.

A conductive material paste for a positive electrode was produced by using a disper blade to stir (3,000 rpm, 60 minutes) 3.0 parts of acetylene black (specific surface area: 800 m²/g) as a conductive material, 0.12 parts of the powder of the first polymer obtained as described above, 0.48 parts (in terms of solid content) of the NMP solution of the second polymer obtained as described above, and NMP. Note that the additive amount of NMP was adjusted such that the solid content concentration of the obtained conductive material paste for a positive electrode was 10%. Also note that this production procedure is denoted as "Y" in the subsequently described Table 1.

### (Comparative Example 1)

A first polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 8 with the exception that a second polymer was not used in production of the binder composition for a positive electrode. The results are shown in Table 1.

### (Comparative Example 2)

A second polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 8 with the exception that a first polymer was not used in production of the binder composition for a positive electrode. The results are shown in Table 1.

### (Comparative Example 3)

A first polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Example 8 with the exception that an NMP solution of polyvinylidene fluoride was used instead of the water dispersion of the second polymer in production of the binder composition for a positive electrode. The results are shown in Table 1.

### (Comparative Example 4)

A first polymer, a binder composition for a positive electrode, a conductive material paste for a positive electrode, a slurry composition for a positive electrode, a positive electrode, a negative electrode, and a lithium ion secondary battery were produced and evaluations were performed in the same way as in Comparative Example 3 with the exception that acetylene black having a specific surface area of 800 m²/g was used as a conductive material in production of the conductive material paste for a positive electrode. The results are shown in Table 1.

In Table 1, shown below:
"VP" indicates N-vinyl-2-pyrrolidone unit;
"VCL" indicates N-vinyl-ε-caprolactam unit;
"AN" indicates acrylonitrile;
"BD" indicates 1,3-butadiene;
"BA" indicates n-butyl acrylate;
"MAA" indicates methacrylic acid; and
"PVDF" indicates polyvinylidene fluoride.

**Table 1**

| | | | | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|---|---|
| | | First polymer | Monomer unit including nitrogen-containing ring | | VP | VP | VCL | VP | VP | VP | VP | VP | VP | VP | - | VP | VP |
| | | | Weight-average molecular weight [×10³] | | 10 | 10 | 10 | 10 | 10 | 45 | 250 | 10 | 10 | 10 | - | 10 | 10 |
| | | | Amount [parts by mass] | | 0.12 | 0.12 | 0.12 | 0.03 | 0.3 | 0.12 | 0.12 | 0.12 | 0.12 | 0.6 | - | 0.12 | 0.12 |
| | | | Used monomers | Nitrile group-containing monomer (AN) [mass%] | 35 | 15 | 35 | 35 | 35 | 35 | 35 | 35 | 35 | - | 35 | PVDF | PVDF |
| | | | | Aliphatic conjugated diene monomer (BD) [mass%] | 65 | - | 65 | 65 | 65 | 65 | 65 | 65 | 65 | - | 65 | | |
| | | Second polymer or other binder (PVDF) | | (Meth)acrylic acid ester monomer (BA) [mass%] | - | 82 | - | - | - | - | - | - | - | - | - | | |
| Slurry composition | Conductive material paste | | | Acidic group-containing monomer (MAA) [mass%] | - | 3 | - | - | - | - | - | - | - | - | - | | |
| | | | Weight-average molecular weight [×10³] | | 200 | 200 | 200 | 200 | 200 | 200 | 200 | 200 | 200 | - | 200 | | |
| | | | Amount [parts by mass] | | 0.48 | 0.48 | 0.48 | 0.57 | 0.3 | 0.48 | 0.48 | 0.48 | 0.48 | - | 0.6 | 0.48 | 0.48 |
| | | First polymer:Second polymer (or PVDF) [mass ratio] | | | 20:80 | 20:80 | 20:80 | 5:95 | 50:50 | 20:80 | 20:80 | 20:80 | 20:80 | 100:0 | 0:100 | 20:80 | 20:80 |
| | | Conductive material | Specific surface area [m²/g] | | 800 | 800 | 800 | 200 | 200 | 800 | 800 | 70 | 800 | 70 | 70 | 70 | 800 |
| | | | Amount [parts by mass] | | 3 | 3 | 3 | 3 | 3 | 3 | 3 | 3 | 3 | 3 | 3 | 3 | 3 |
| | | Production procedure | | | X | X | X | X | X | X | X | X | Y | X | X | X | X |
| | Positive electrode active material | | Amount [parts by mass] | | 100 | 100 | 100 | 100 | 100 | 100 | 100 | 100 | 100 | 100 | 100 | 100 | 100 |
| | Other binder (PVDF) | | Amount [parts by mass] | | 2 | 2 | 2 | 2 | 2 | 2 | 2 | 2 | 2 | 2 | 2 | 2 | 2 |
| Evaluation | Water content | | | | A | A | A | A | B | B | B | A | A | D | B | C | E |
| | Inhibition of swelling in electrolyte solution | | | | A | A | A | B | A | A | B | A | A | D | D | D | E |
| | Peel strength | | | | A | A | A | A | B | A | A | A | A | C | C | C | E |
| | Low-temperature characteristics | | | | A | A | B | B | B | A | B | C | A | D | E | D | C |
| | High-temperature cycle characteristics | | | | A | A | A | B | B | B | C | B | A | D | C | D | E |

It can be seen from Table 1 that in each of Examples 1 to 9 in which the used slurry composition contained a positive electrode active material, a conductive material, a first polymer including a monomer unit including a nitrogen-containing ring, a second polymer including a nitrile group-containing monomer unit in a proportion of not less than 10 mass% and not more than 70 mass%, and an organic solvent, it was possible to form a positive electrode for which swelling in electrolyte solution was inhibited and water content was lowered. It can also be seen that the positive electrode formed using the slurry composition in each of Examples 1 to 9 had excellent peel strength and could cause a lithium ion secondary battery to display excellent high-temperature cycle characteristics and low-temperature characteristics.

On the other hand, it can be seen that in Comparative Example 1 in which the used slurry composition contained a first polymer such as described above but did not contain a second polymer such as described above, swelling of a positive electrode in electrolyte solution could not be inhibited, water content of the positive electrode increased, and peel strength of the positive electrode and high-temperature cycle characteristics and low-temperature characteristics of a lithium ion secondary battery deteriorated.

Moreover, it can be seen that in Comparative Example 2 in which the used slurry composition contained a second polymer such as described above but did not contain a first polymer such as described above, swelling of a positive electrode in electrolyte solution could not be inhibited, and peel strength of the positive electrode and low-temperature characteristics of a lithium ion secondary battery deteriorated.

Furthermore, it can be seen that in Comparative Examples 3 and 4 in which the used slurry composition contained a first polymer such as described above but was produced using polyvinylidene fluoride instead of a second polymer such as described above, swelling of a positive electrode in electrolyte solution could not be inhibited, water content of the positive electrode increased, and peel strength of the positive electrode and high-temperature cycle characteristics of a lithium ion secondary battery deteriorated.

### INDUSTRIAL APPLICABILITY

According to the present disclosure, it is possible to provide a slurry composition for an electrochemical device electrode with which it is possible to produce an electrode in which water content is lowered while also inhibiting swelling thereof in electrolyte solution, and that can cause an electrochemical device to display excellent device characteristics, and also to provide a method of producing this slurry composition for an electrochemical device electrode.

Moreover, according to the present disclosure, it is possible to provide an electrode for an electrochemical device in which water content is lowered while also inhibiting swelling thereof in electrolyte solution, and that can cause an electrochemical device to display excellent device characteristics.

Furthermore, according to the present disclosure, it is possible to provide an electrochemical device having excellent device characteristics such as high-temperature cycle characteristics and low-temperature characteristics.

## Claims

1. A slurry composition for an electrochemical device electrode comprising an electrode active material, a conductive material, a first polymer, a second polymer, and an organic solvent, wherein
the first polymer includes a monomer unit including a nitrogen-containing ring, and
the second polymer includes a nitrile group-containing monomer unit in a proportion of not less than 10 mass% and not more than 70 mass%.

2. The slurry composition for an electrochemical device electrode according to claim 1, wherein the conductive material has a specific surface area of not less than 100 m²/g and not more than 2,000 m²/g.

3. The slurry composition for an electrochemical device electrode according to claim 1 or 2, wherein the nitrogen-containing ring is a monocyclic structure.

4. The slurry composition for an electrochemical device electrode according to any one of claims 1 to 3, wherein the monomer unit including the nitrogen-containing ring is an N-vinyl-2-pyrrolidone unit.

5. The slurry composition for an electrochemical device electrode according to any one of claims 1 to 4, wherein the second polymer further includes either or both of an alkylene structural unit and a (meth)acrylic acid ester monomer unit.

6. The slurry composition for an electrochemical device electrode according to any one of claims 1 to 5, wherein content of the first polymer is not less than 3 mass% and not more than 60 mass% of total content of the first polymer and the second polymer.

7. An electrode for an electrochemical device comprising an electrode mixed material layer formed using the slurry composition for an electrochemical device electrode according to any one of claims 1 to 6.

8. An electrochemical device comprising the electrode for an electrochemical device according to claim 7.

9. A method of producing the slurry composition for an electrochemical device electrode according to any one of claims 1 to 6, comprising:
producing a conductive material paste containing the conductive material, the first polymer, the second polymer, and the organic solvent; and
adding the electrode active material to the conductive material paste.
